# EUROPÄISCHE PATENTANMELDUNG

(11) **EP 2 031 019 A2**
(43) Veröffentlichungstag der Anmeldung: **04.03.2009**
(21) Anmeldenummer: 08014947.9
(22) Anmeldetag: 23.08.2008
(51) Int. Cl.: C08L 67/02

(54) **Flammwidrige Polyestercompounds**

(30) Priorität: 01.09.2007 DE 102007041594
(71) Anmelder: Clariant International Ltd., 4132 Muttenz (CH)
(72) Erfinder: Schloßer, Elke, Dr., 86163 Augsburg (DE); Hörold, Sebastian, Dr., 86420 Diedorf (DE); Schwarz, Ute, DI., 07407 Rudolfstadt (DE); Reinemann, Stefan, Dr., 07407 Rudolfstadt (DE)
(74) Vertreter: Paczkowski, Marcus

(57) **Zusammenfassung**

Die Erfindung betrifft flammwidrige Polyestercompounds, enthaltend als Komponente A 40 bis 64,9 Gew.-% thermoplastischen Polyester, als Komponente B 5 bis 10 Gew.-% Polycarbonat, als Komponente C 10 bis 15 Gew.-% Phosphinsäuresalz der Formel (I) und/oder Diphosphinsäuresalz der Formel (II) und/oder deren Polymere, 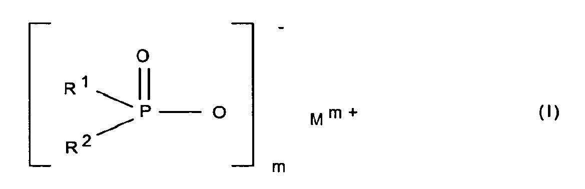 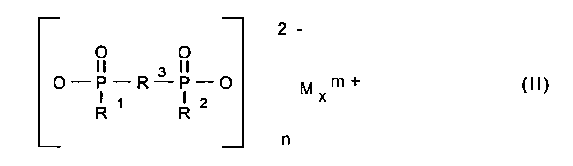 worin
R¹, R²
gleich oder verschieden sind und H oder C₁-C₆-Alkyl, linear oder verzweigt und/oder Aryl;
R³
C₁-C₁₀-Alkylen, linear oder verzweigt, C₆-C₁₀-Arylen, -Alkylarylen oder -Arylalkylen;
M
Mg, Ca, Al, Sb, Sn, Ge, Ti, Fe, Zr, Ce, Bi, Sr, Mn, Li, Na, K und/oder eine protonierte Stickstoffbase;
m
1 bis 4; n 1 bis 4; x 1 bis 4 bedeuten

als Komponente D 5 bis 10 Gew.-% Melaminpolyphosphat, als Komponente E 15 bis 30 Gew.-% Verstärkungsstoffe und als Komponente F 0,1 bis 2 Gew.-% weitere Additive, wobei die Summe der Gewichtskomponenten 100 Gew.-% ergibt.

## Beschreibung

Die Erfindung betrifft flammwidrige Polyestercompounds mit verbesserten Brandeigenschaften und exzellenten mechanischen Eigenschaften.

Aufgrund ihrer chemischen Zusammensetzung sind viele Kunststoffe leicht brennbar. Um die von Kunststoffverarbeitern und teilweise vom Gesetzgeber geforderten hohen Flammschutzanforderungen erreichen zu können, müssen Kunststoffe daher in der Regel mit Flammschutzmitteln ausgerüstet werden. Hierzu sind eine Vielzahl unterschiedlicher Flammschutzmittel und Flammschutzmittelsynergisten bekannt und auch kommerziell erhältlich.

Aufgrund der vorteilhafteren Brandnebenerscheinungen bezüglich Rauchgasdichte und Rauchgaszusammensetzung sowie aus ökologischen Gründen werden nichthalogenierte Flammschutzmittelsysteme seit einiger Zeit bevorzugt eingesetzt. Unter den nicht-halogenierten Flammschutzmitteln haben sich für thermoplastische Polyester insbesondere die Salze von Phosphinsäuren (Phosphinate) als besonders wirksam erwiesen (DE-A-2 252 258 und DE-A-2 447 727). Calcium- und Aluminiumphosphinate sind in Polyestern als sehr effektiv beschrieben worden und beeinträchtigen die Materialeigenschaften der Polymerformmassen weniger als z. B. die Alkalimetallsalze (EP-A-0 699 708).

Darüber hinaus wurden synergistische Kombinationen von Phosphinaten mit verschiedenen stickstoffhaltigen Verbindungen gefunden, die in einer ganzen Reihe von Polymeren als Flammschutzmittel effektiver wirken als die Phosphinate allein (PCT/EP 97/01664, DE-A-197 34 437, DE-A-197 37 727 und US-A-6,255,371).

Die WO2005/059 018 beschreibt ein Polybutylenterephthalat mit einem Stickstoffhaltigen Flammschutzmittel, einem Phosphinat und einem aschebildende Polymer. Aschebildende Polymere sind hier Polyetherimide, Polyphenylenether, Polyphenylensulfid, Polysulfone, Polyethersulfone, Polyphenylensulfidoxide oder Phenolharze. Durch den Zusatz des aschebildenden Polymers wird die Flammwidrigkeit verbessert. Nachteilig an den dort beschriebenen Zusätzen ist der hohe Preis der aschebildenden Polymere sowie ihre Tendenz, zu Verfärbungen zu führen.

Die DE 10 2005 050956 beschreibt thermoplastische Formmassen bestehend aus einem Polybutylenterephthalat und einem Polyester verschieden von Polybutylenterephthalat, sowie Phosphinate und ein Umsetzungsprodukt aus einer stickstoffhaltigen Verbindung mit Phosphorsäure. Bevorzugt sind Polyethylenterephthalate (PET) und Polytrimethylenterephthalate. Durch den Zusatz von PET wird UL 94 V-0 erreicht sowie eine gute Kriechstromfestigkeit und gute mechanische Eigenschaften. Es wird ein GWIT nach IEC 60695-2-13 von 775 °C bei 1,5 mm Materialstärke erreicht.

Werden die Phosphinate alleine oder in Kombination mit anderen Flammschutzmitteln in Polyestern eingesetzt, kommt es in der Regel zu einem gewissen Polymerabbau, der sich negativ auf die mechanischen Eigenschaften des Polymersystems auswirkt.

Nachteilig sind darüber hinaus unsichere UL 94 V-0 Einstufungen durch zu lange Nachbrennzeiten einzelner Probekörper, keine sichere GWIT 775 °C Einstufung bei dünnen Wandstärken (< 1,5 mm) und Bruchdehnungen unter 2 %, insbesondere bei Glas(faser)gehalten von 25 - 35 %.

Es wurde nun überraschenderweise gefunden, dass durch den Zusatz von Polycarbonaten zu Polyestern, insbesondere zu Polybutylenterephthalat und einer Flammschutzmittelkombination basierend auf Phosphinaten flammwidrige Polyestercompunds erzeugt werden könne, die sich durch eine sichere UL 94 V-0 Einstufung, erhöhte Glühdrahtfestigkeit, verbesserte Mechanik und verringerten Polymerabbau auszeichnen.

Gegenstand der Erfindung sind daher flammwidrige Polyestercompounds, enthaltend als Komponente A 40 bis 64,9 Gew.-% thermoplastischen Polyester, als Komponente B 5 bis 10 Gew.-% Polycarbonat, als Komponente C 10 bis 15 Gew.-% Phosphinsäuresalz der Formel (I) und/oder Diphosphinsäuresalz der Formel (II) und/oder deren Polymere, 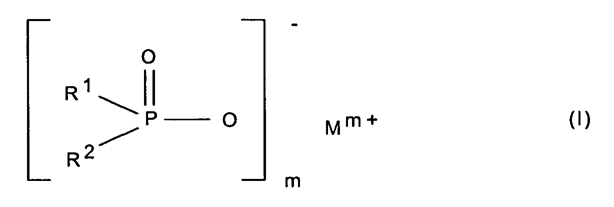 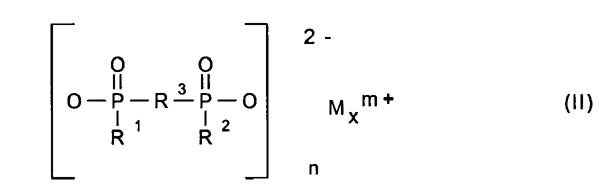 worin
R¹, R² gleich oder verschieden sind und H oder C₁-C₆-Alkyl, linear oder verzweigt und/oder Aryl;
R³ C₁-C₁₀-Alkylen, linear oder verzweigt, C₆-C₁₀-Arylen, -Alkylarylen oder -Arylalkylen;
M Mg, Ca, Al, Sb, Sn, Ge, Ti, Fe, Zr, Ce, Bi, Sr, Mn, Li, Na, K und/oder eine protonierte Stickstoffbase;
m 1 bis 4; n 1 bis 4; x 1 bis 4 bedeuten,
als Komponente D 5 bis 10 Gew.-% Melaminpolyphosphate, als Komponente E 15 bis 30 Gew.-% Verstärkungsstoffe und als Komponente F 0,1 bis 2 Gew.-% weitere Additive, wobei die Summe der Gewichtskomponenten 100 Gew.-% ergibt.

Besonders bevorzugt sind R¹, R² gleich oder verschieden und bedeuten Methyl, Ethyl, n-Propyl, iso-Propyl, n-Butyl, tert.-Butyl, n-Pentyl und/oder Phenyl.

Bevorzugt bedeutet R³ Methylen, Ethylen, n-Propylen, iso-Propylen, n-Butylen, tert.-Butylen, n-Pentylen, n-Octylen oder n-Dodecylen; Phenylen oder Naphthylen; Methyl-phenylen, Ethyl-phenylen, tert.-Butylphenylen, Methyl-naphthylen, Ethylnaphthylen oder tert.-Butylnaphthylen; Phenyl-methylen, Phenylethylen, Phenylpropylen oder Phenyl-butylen.

Bevorzugt handelt es sich bei der Komponente E um mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat und/oder Bariumsulfat.

Besonders bevorzugt handelt es sich bei der Komponente E um Glasfasern.

Bevorzugt enthalten die flammwidrigen Polyestercompounds weiterhin Carbodiimide.

Bevorzugt handelt es sich bei der Komponente F um Gleit- und/oder Entformungsmittel.

Bevorzugt handelt es sich bei den Gleit- und/oder Entformungsmitteln um langkettige Fettsäuren, deren Salze, deren Esterderivate und/oder Amidderivate, Montanwachse und/oder niedermolekulare Polyethylen- und/oder Polypropylenwachse.

Die Erfindung betrifft auch ein Verfahren zur Herstellung der erfindungsgemäßen flammwidrigen Polyestercompounds, dadurch gekennzeichnet, dass man die Komponenten A bis F in den genannten Gewichtsanteilen durch Schmelzextrusion vermischt.

Die Erfindung betrifft zudem Fasern, Folien und Formkörpern aus den flammwidrigen Polyestercompounds nach einem oder mehreren der Ansprüche 1 bis 7.

Schließlich betrifft die Erfindung die Verwendung der Fasern, Folien und Formkörper aus den erfindungsgemäßen flammwidrigen Polyestercompounds gemäß Anspruch 9 im Haushalt, der Industrie, in Medizin, in Kraftfahrzeugen, in Flugzeugen, in Schiffen, in Raumschiffen sowie in anderen Fortbewegungsmitteln, in Büroausstattungen sowie in Gegenständen und Gebäuden die einen erhöhten Brandschutz erfordern.

Bevorzugt bedeutet M Magnesium, Calcium, Aluminium oder Zink, besonders bevorzugt Aluminium oder Zink.

Bevorzugt bedeutet m 2 oder 3; n 1 oder 3; x 1 oder 2.

Die thermoplastischen Polyester (Komponente A) sind ausgewählt aus der Gruppe der Polyalkylenterephthalate. Polyalkylenterephthalate im Sinne der Erfindung sind Reaktionsprodukte aus aromatischen Dicarbonsäuren oder ihren reaktionsfähigen Derivaten (z. B. Dimethylestern oder Anhydriden) und aliphatischen, cycloaliphatischen oder araliphatischen Diolen und Mischungen dieser Reaktionsprodukte.

Erfindungsgemäß bevorzugt einzusetzende Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695-710, Karl-Hanser-Verlag, München 1973).

Erfindungsgemäß bevorzugt einzusetzende Polyalkylenterephthalate enthalten mindestens 80 Mol-%, vorzugsweise 90 Mol-%, bezogen auf die Dicarbonsäure, Terephthalsäurereste.

Die erfindungsgemäß bevorzugt einzusetzenden Polyalkylenterephthalate können neben Terephthalsäureresten bis zu 20 Mol-% Reste anderer aromatischer Dicarbonsäuren mit 8 bis 14 C-Atomen oder Reste aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure, Cyclohexandicarbonsäure.

Die erfindungsgemäß einzusetzenden Polyalkylenterephthalate können durch Einbau relativ kleiner Mengen 3- oder 4-wertiger Alkohole oder 3- oder 4-basischer Carbonsäuren, wie sie z. B. in der DE-A-19 00 270 beschrieben sind, verzweigt werden. Beispiele für bevorzugte Verzweigungsmittel sind Trimesinsäure, Trimellitsäure, Trimethylolethan und -propan und Pentaerythrit.

Erfindungsgemäß besonders bevorzugt sind Polyalkylenterephthalate, die allein aus Terephthalsäure und deren reaktionsfähigen Derivaten (z. B. deren Dialkylestern) und Ethylenglykol und/oder Propandiol-1,3 und/oder Butandiol-1,4 hergestellt werden (Polyethylen- und Polytrimethylen- und Polybutylenterephthalat), und Mischungen dieser Polyalkylenterephthalate.

Bevorzugte Polybutylenterephthalate enthalten mindestens 80 Mol-%, vorzugsweise 90 Mol-%, bezogen auf die Dicarbonsäure, Terephthalsäurereste und mindestens 80 Mol-%, vorzugsweise mindestens 90 Mol-%, bezogen auf die Diolkomponente Butandiol-1,4-reste.

Die bevorzugten Polybutylenterephthalate können des weiteren neben Butandiol-1,4-resten bis zu 20 Mol-% anderer aliphatischer Diole mit 2 bis 12 C-Atomen oder cycloaliphatischer Diole mit 6 bis 21 C-Atomen enthalten, z. B. Reste von Ethylenglycol, Propandiol-1,3, 2-Ethylpropandiol-1,3, Neopentylglykol, Pentandiol-1,5, Hexandiol-1.6, Cyclohexan-dimethanol-1,4, 3-Methylpentandiol-2,4, 2-Methylpentandiol-2,4, 2,2,4-Trimethylpentandiol-1,3 und -1,6,2-Ethylhexandiol-1,3 2,2-Diethylpropandiol-1,3, Hexandiol-2,5, 1,4-Di-([beta]-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-[beta]-hydroxyethoxyphenyl)-propan und 2,2-bis-(4-hydroxypropoxyphenyl)-propan (DE-A-24 07 674, DE-A-24 07 776, DE-A-27 15 932).

Erfindungsgemäß bevorzugt einzusetzende Polyalkylenterephthalate sind auch Copolyester, die aus mindestens zwei der oben genannten Säurekomponenten und/oder aus mindestens zwei der oben genannten Alkoholkomponenten und/oder Butandiol-1,4 hergestellt werden. Besonders bevorzugte Copolyester sind Poly-(ethylenglykol/butandiol-1,4)-terephthalate.

Die als Komponente A erfindungsgemäß einzusetzenden thermoplastischen Polyester können auch im Gemisch mit anderen Polyestern und/oder weiteren Polymeren eingesetzt werden.

Die erfindungsgemäßen einzusetzenden Polycarbonate (Komponente B) sind Umsetzungsprodukte von Phosgen mit Diolen, bevorzugt Diphenolen.

Polycarbonate sind glasklar, einfärb-, schweiß- und klebbar, außerdem sehr dimensionsstabil und besitzen eine hohe Schlagzähigkeit. Daher werden sie für Spritzgussartikel, wie zum Beispiel für die Herstellung von CDs und Isolierfolien eingesetzt.

Bevorzugte Diphenole sind beispielsweise 4,4'-Dihydroxybiphenyl (DOD), 2,2-Bis-(4-hydroxyphenyl)-propan (Bisphenol A), 1,1-Bis-(4-hydroxyphenyl)-3,3,5-trimethylcyclohexan (Bisphenol TMC), 1,1-Bis-(4-hydroxyphenyl)-cyclohexan, 2,4-Bis-(4-hydroxyphenyl)-2-methylbutan, 1,1-Bis-(4-hydroxyphenyl)-1-phenylethan, 1,1-Bis-(4-hydroxyphenyl)-p-diisopropylbenzol, 1,3-Bis[2-(4-hydroxyphenyl)-2-propyl]-benzol (Bisphenol M), 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 2,2-Bis-(3,5-dichlor-4-hydroxyphenyl)-propan und 2,2-Bis-(3,5-dibrom-4-hydroxyphenyl)-propan.

Besonders bevorzugte Diphenole sind beispielsweise 2,2-Bis-(4-hydroxyphenyl)-propan (Bisphenol A), 1,3-Bis[2-(4-hydroxyphenyl)-2-propyl]-benzol (Bisphenol M), 2,2-Bis-(3,5-dimethyl-4-hydroxyphenyl)-propan, 1,1-Bis-(4-hydroxyphenyl)-1-phenylethan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Die Diphenole können sowohl allein als auch im Gemisch miteinander verwendet werden; es sind sowohl Homopolycarbonate als auch Copolycarbonate einbezogen. Die Diphenole sind literaturbekannt oder nach literaturbekannten Verfahren herstellbar (siehe z.B. H. J. Buysch et al., Ullmann's Encyclopedia of Industrial Chemistry, VCH, New York 1991, 5. Ed., Vol. 19, p. 348).

Besonders bevorzugt handelt es sich bei der Komponente D um Melaminpolyphosphat.

Besonders bevorzugt werden erfindungsgemäß mineralische teilchenförmige Füllstoffe auf der Basis von Talk, Wollastonit, Kaolin und/oder Glasfasern eingesetzt.

Insbesondere für Anwendungen, in denen Isotropie bei der Dimensionsstabilität und eine hohe thermische Dimensionsstabilität gefordert werden, wie beispielsweise in Kfz-Anwendungen für Karosserieaußenteile, werden bevorzugt mineralische Füllstoffe eingesetzt, insbesondere Talk, Wollastonit oder Kaolin.

Besonders bevorzugt können ferner auch nadelförmige mineralische Füllstoffe als Komponente E eingesetzt werden. Unter nadelförmigen mineralischen Füllstoffen wird erfindungsgemäß ein mineralischer Füllstoff mit stark ausgeprägtem nadelförmigen Charakter verstanden. Als Beispiel seien nadelförmige Wollastonite genannt. Bevorzugt weist das Mineral ein Länge : Durchmesser-Verhältnis von 2:1 bis 35:1, besonders bevorzugt von 3:1 bis 19:1, am meisten bevorzugt von 4:1 bis 12:1 auf. Die mittlere Teilchengröße der erfindungsgemäßen geeigneten nadelförmigen Mineralien liegt bevorzugt bei kleiner 20 Microm, besonders bevorzugt bei kleiner 15 Microm, insbesondere bevorzugt bei kleiner 10 Microm.

Der Füllstoff und/oder Verstärkungsstoff kann gegebenenfalls oberflächenmodifiziert sein, beispielsweise mit einem Haftvermittler bzw. Haftvermittlersystem z. B. auf Silanbasis. Die Vorbehandlung ist jedoch nicht unbedingt erforderlich. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Die als Komponente E gegebenenfalls erfindungsgemäß besonders bevorzugt einzusetzenden Glasfasern, die im allgemeinen einen Faserdurchmesser zwischen 7 und 18 Microm, bevorzugt zwischen 9 und 15 Microm haben, werden als Endlosfasern oder als geschnittene oder gemahlene Glasfasern zugesetzt. Die Fasern können mit einem geeigneten Schlichtesystem und einem Haftvermittler bzw. Haftvermittlersystem z. B. auf Silanbasis ausgerüstet sein.

Bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Füllstoffe werden die Silanverbindungen im Allgemeinen in Mengen von 0,05 bis 2 Gew.-%, vorzugsweise 0,25 bis 1,5 Gew.-% und insbesondere 0,5 bis 1 Gew.-% bezogen auf den mineralischen Füllstoff, zur Oberflächenbeschichtung eingesetzt.

Die teilchenförmigen Füllstoffe können bedingt durch die Verarbeitung zur Formmasse bzw. Formkörper in der Formmasse bzw. im Formkörper einen kleineren d97- bzw. d50-Wert aufweisen, als die ursprünglich eingesetzten Füllstoffe. Die Glasfasern können bedingt durch die Verarbeitung zur Formmasse bzw. Formkörper in der Formmasse bzw. im Formkörper kürzere Längenverteilungen als ursprünglich eingesetzt aufweisen.

In einer weiteren alternativen bevorzugten Ausführungsform können die Formmassen zusätzlich zu den Komponenten A bis E) als Komponente F mindestens ein Gleit- und Entformungsmittel enthalten. Hierzu eignen sich beispielsweise langkettige Fettsäuren (z. B. Stearinsäure oder Behensäure), deren Salze (z. B. Ca- oder Zn-Stearat) sowie deren Esterderivate oder Amidderivate (z. B. Ethylen-bis-stearylamid), Montanwachse (Mischungen aus geradkettigen, gesättigten Carbonsäuren mit Kettenlängen von 28 bis 32 C-Atomen) sowie niedermolekulare Polyethylen- bzw. Polypropylenwachse. Erfindungsgemäß werden bevorzugt Gleit- und/oder Entformungsmittel aus der Gruppe der niedermolekularen Polyethylenwachse sowie der Ester gesättigter oder ungesättigter aliphatischer Carbonsäuren mit 8 bis 40 C-Atomen mit aliphatischen gesättigten Alkoholen mit 2 bis 40 C-Atomen eingesetzt, wobei Pentaerythrit-tetrastearat (PETS) ganz besonders bevorzugt ist.

In einer weiteren alternativen bevorzugten Ausführungsform können die Formmassen zusätzlich zu den Komponenten A bis E noch weitere Additive enthalten. Übliche Additive sind z. B. Stabilisatoren (zum Beispiel UV-Stabilisatoren, Thermostabilisatoren, Gammastrahlenstabilisatoren, Hydrolysestabilisatoren), Antistatika, weitere Flammschutzmittel, Emulgatoren, Nukleierungsmittel, Weichmacher, Verarbeitungshilfsmittel, Schlagzähmodifikatoren, Farbstoffe und Pigmente. Die Additive können alleine oder in Mischung bzw. in Form von Masterbatchen eingesetzt werden oder vorweg der Komponente A) in der Schmelze zugemischt oder auf deren Oberfläche aufgebracht werden.

Als Stabilisatoren können zum Beispiel sterisch gehinderte Phenole und/oder Phosphite, Hydrochinone, aromatische sekundäre Amine wie Diphenylamine, substituierte Resorcine, Salicylate, Benzotriazole und Benzophenone, sowie verschieden substituierte Vertreter dieser Gruppen und deren Mischungen eingesetzt werden.
Als geeignete UV-Stabilisatoren seien verschiedene substituierte Resorcine, Salicylate, Benzotriazole und Benzophenone genannt.

Im Falle von Schlagzähmodifikatoren (Elastomermodifikatoren, Modifikatoren) handelt es sich ganz allgemein um Copolymerisate, die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Es können anorganische Pigmente, wie Titandioxid, Ultramarinblau, Eisenoxid, Zinksulfid und Russ, weiterhin organische Pigmente, wie Phthalocyanine, Chinacridone, Perylene sowie Farbstoffe, wie Nigrosin und Anthrachinone als Farbmittel sowie andere Farbmittel zugesetzt werden. Im Rahmen der vorliegenden Erfindung ist die Verwendung von Russ bevorzugt.

Als Nukleierungsmittel können z. B. Natrium- oder Calciumphenylphosphinat, Aluminiumoxid oder Siliziumdioxid sowie bevorzugt Talkum eingesetzt werden.

Als Verarbeitungshilfsmittel können zum Beispiel Copolymerisate aus mindestens einem [alpha]-Olefin mit mindestens einem Methacrylsäurester oder Acrylsäureester eines aliphatischen Alkohols eingesetzt werden. Bevorzugt sind dabei Copolymerisate, bei denen das [alpha]-Olefin aus Ethen und/oder Propen aufgebaut ist und der Methacrylsäurester oder Acrylsäureester als Alkoholkomponente lineare oder verzweigte Alkylgruppen mit 4 bis 20 C-Atomen enthält. Besonders bevorzugt ist Acrylsäurebutylester und Acrylsäure-(2-ethyl)-hexylester.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid genannt.

Im Folgenden umfasst der Begriff "Phosphinsäuresalz" Salze der Phosphin- und Diphosphinsäuren und deren Polymere.

Die Phosphinsäuresalze, die in wässrigem Medium hergestellt werden, sind im Wesentlichen monomere Verbindungen. In Abhängigkeit von den Reaktionsbedingungen können unter Umständen auch polymere Phosphinsäuresalze entstehen.

Geeignete Phosphinsäuren als Bestandteil der Phosphinsäuresalze sind beispielsweise:
Dimethylphosphinsäure, Ethyl-methylphosphinsäure, Diethylphosphinsäure, Methyln-propyl-phosphinsäure, Methan-di(methylphosphinsäure), Benzol-1,4-(dimethylphosphinsäure), Methyl-phenyl-phosphinsäure, Diphenylphosphinsäure.

Die Salze der Phosphinsäuren gemäß der Erfindung können nach bekannten Methoden hergestellt werden, wie sie beispielsweise in der EP-A-699 708 näher beschrieben sind. Die Phosphinsäuren werden dabei beispielsweise in wässriger Lösung mit Metallcarbonaten, Metallhydroxiden oder Metalloxiden umgesetzt.

Die vorgenannten Phosphinsäuresalze können für die erfindungsgemäßen Polyestercompounds je nach Art des verwendeten Polymeren und der gewünschten Eigenschaften in verschiedener physikalischer Form angewendet werden. So können die Phosphinsäuresalze z. B. zur Erzielung einer besseren Dispersion im Polymeren zu einer feinteiligen Form vermahlen werden. Falls erwünscht können auch Gemische verschiedener Phosphinsäuresalze eingesetzt werden.

Die Phosphinsäuresalze gemäß der Erfindung sind thermisch stabil, zersetzen die Polymeren weder bei der Verarbeitung noch beeinflussen sie den Herstellprozess der Kunststoff-Formmasse. Die Phosphinsäuresalze sind unter den üblichen Herstellungs- und Verarbeitungsbedingungen für Polyester nicht flüchtig.

Die Komponenten C und D können in thermoplastische Polyester eingearbeitet werden, indem z. B. alle Bestandteile als Pulver und/oder Granulat in einem Mischer vorgemischt und anschließend in einem Compoundieraggregat (z. B. einem Doppelschneckenextruder) in der Polymerschmelze homogenisiert werden. Die Schmelze wird üblicherweise als Strang abgezogen, gekühlt und granuliert. Die Komponenten C sowie D können auch separat über eine Dosieranlage direkt in das Compoundieraggregat eingebracht werden.
Es ist ebenso möglich, die flammhemmenden Zusätze C und D einem fertigen Polymergranulat bzw. -pulver beizumischen und die Mischung direkt auf einer Spritzgussmaschine zu Formteilen zu verarbeiten.

Bei Polyestern beispielsweise können die flammhemmenden Zusätze C und D auch bereits während der Polykondensation in die Polyestermasse gegeben werden.

Die flammwidrigen Polyestercompounds eignen sich zur Herstellung von Formkörpern, Filmen, Fäden und Fasern, z. B. durch Spritzgießen, Extrudieren oder Verpressen.

Erfindungsgemäß bevorzugt sind insbesondere Kombinationen, die
30 bis 64,9 Gew.-% Polyester
3 bis 15 Gew.-% Polycarbonat,
8 bis 20 Gew.-% Zn-, Ti- und/oder Al-Salze der Diethylphosphinsäure und/oder der Methylethylphosphinsäure,
8 bis 20 Gew.-% Melaminpolyphosphat,
16 bis 35 Gew.-% Glasfasern und
0,1 bis 1 Gew.-% Gleitmittel
enthalten.

### Beispiele

1. Eingesetzte Komponenten
   Handelsübliche Polyester (Granulate), Komponente A:
   Polybutylenterephthalat (PBT): Ultradur^{®} 4500 (Fa. BASF, D)
   Handelsübliche Polycarbonat (Granulate), Komponente B:
   Makrolon^{®} 2805 (Fa. Bayer Material Science, D)
   Komponente C:
   Aluminiumsalz der Diethylphosphinsäure, im Folgenden als Depal bezeichnet. Zinksalz der Diethylphosphinsäure, im Folgenden als Depzn bezeichnet.
   Komponente D:
   Melapur^{®} 200/70 (Melaminpolyphosphat), Fa. Ciba Specialty Chemicals, CH
   Komponente E:
   Vetrotex^{®} EC 10 P 952 (Glasfasern), Fa. Vetrotex Reinforcement, D
   Komponente F:
   Gleitmittel: Licolub^{®} FA1, Montanwachs, Fa. Clariant, CH
2. Herstellung, Verarbeitung und Prüfung von flammwidrigen Polyestercompounds

Die Flammschutzkomponenten wurden in dem in den Tabellen angegebenen Verhältnis mit dem Polymergranulat und evtl. Additiven vermischt und auf einem Doppelschnecken-Extruder (Typ Leistritz ZSE 27 HP-44D) bei Temperaturen von 240 bis 280 °C eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Arburg 320C/KT) bei Massetemperaturen von 260 bis 280 °C zu Prüfkörpern verarbeitet. Die Flammwidrigkeit der Formmassen wurde nach der Methode UL94V (Underwriters Laboratories Inc. Standard of Safety, "Test for Flammability of Plastic Materials for Parts in Devices and Appliances", S. 14 bis S. 18 Northbrook 1998) bestimmt.

Die Glühdrahtbeständigkeit wurde anhand der Glühdrahtprüfung GWFI (Glow-Wire Flammability-Index) nach IEC 60695-2-12 sowie an der Glühdrahtentzündlichkeitsprüfung GWIT (Glow-Wire-Ignition-Temperature) nach IEC 60695-2-13 bestimmt. Bei der GWFI-Prüfung wird an 3 Prüfkörpern (beispielsweise an Platten der Geometrie 60 X 60 X 1,5 mm) mit Hilfe eines glühenden Drahtes bei Temperaturen zwischen 550 und 960 °C die maximale Temperatur ermittelt, bei der eine Nachbrennzeit von 30 Sekunden nicht überschritten wird und die Probe nicht brennend abtropft. Bei der GWIT-Prüfung wird bei einer vergleichbaren Messprozedur die Glühdrahtentzündungstemperatur angegeben, die 25K (30K zwischen 900 °C und 960 °C höher ist als die maximale Glühdrahttemperatur, die in 3 aufeinander folgenden Tests auch während der Einwirkzeit des Glühdrahtes nicht zur Entzündung führt. Als Entzündung gilt dabei eine Flamme mit Brennzeit > = 5 sec.

**Tabelle 1: Zusatz von Polycarbonat zu PBT GF 30 mit Depal und Melaminpolyphosphat**

| Beispiel | | 1 | 2 | 3 |
|---|---|---|---|---|
| PBT | (Gew.-%) | 50 | 45 | 40 |
| Glasfasern | (Gew.-%) | 30 | 30 | 30 |
| Depal | (Gew.-%) | 13,3 | 13,3 | 13,3 |
| Melaminpolyphosphat | (Gew.-%) | 6,7 | 6,7 | 6,7 |
| PC | (Gew.-%) | | 5 | 10 |
| Gleitmittel | (Gew.-%) | 0,3 | 0,3 | 0,3 |
| UL94 (0,8 mm) | | V1 | V0 | V0 |
| GWIT (1 mm) | (°C) | 750 | 775 | 775 |
| Reißdehnung | (Gew.-%) | 1,9 | 2,2 | 2,0 |
| SZ bei RT | (kJ/m²) | 36 | 37 | 43 |
| KSZ bei RT | (kJ/m²) | 6,2 | 5,6 | 6,4 |

| | | | | |
|---|---|---|---|---|
| SZ = Schlagzähigkeit; KSZ = Kerbschlagzähigkeit | | | | |

**Tabelle 2: Zusatz von Polycarbonat zu PBT GF 30 mit Depzn und Melaminpolyphosphat**

| Beispiel | | 4 | 5 | 6 |
|---|---|---|---|---|
| PBT | (Gew.-%) | 50 | 45 | 40 |
| Glasfasern | (Gew.-%) | 25 | 25 | 25 |
| Depzn | (Gew.-%) | 12,5 | 12,5 | 12,5 |
| Melaminpolyphosphat | (Gew.-%) | 12,5 | 12,5 | 12,5 |
| PC | (Gew.-%) | | 5 | 10 |
| Gleitmittel | (Gew.-%) | 0,3 | 0,3 | 0,3 |
| UL94 (0,8 mm) | | V1 | V0 | V0 |
| GWIT (1 mm) | (°C) | 750 | 775 | 775 |
| Reißdehnung | (Gew.-%) | 2,1 | 2,3 | 2,3 |
| SZ bei RT | (kJ/m²) | 36 | 37 | 43 |
| KSZ bei RT | (kJ/m²) | 6,2 | 5,6 | 6,4 |

| | | | | |
|---|---|---|---|---|
| SZ = Schlagzähigkeit; KSZ = Kerbschlagzähigkeit | | | | |

Die Beispiele 1 und 4 sind Vergleichsbeispiele, die zeigen, dass UL 94 V-0 bei 0,8 mm nicht erreicht wird und der GWIT nur 750 °C beträgt. Auch die Reißdehnung ist zum Teil unter 2 %.

Durch den Zusatz von 5 bis 10 Gew.-% Polycarbonat gemäß der Erfindung wird eine sichere V-0 Einstufung erreicht, der GWIT auf 775 °C erhöht und die Reißdehnung verbessert.

## Patentansprüche

1. Flammwidrige Polyestercompounds, enthaltend als Komponente A 40 bis 64,9 Gew.-% thermoplastischen Polyester, als Komponente B 5 bis 10 Gew.-% Polycarbonat, als Komponente C 10 bis 15 Gew.-% Phosphinsäuresalz der Formel (I) und/oder Diphosphinsäuresalz der Formel (II) und/oder deren Polymere, 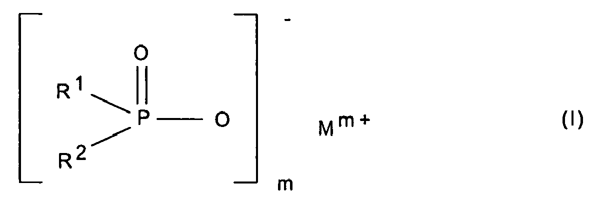 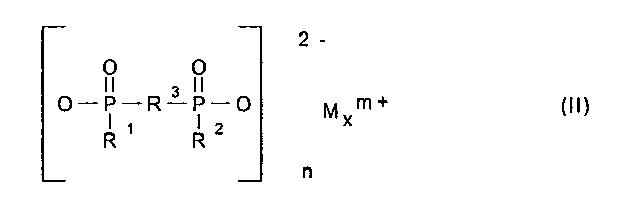 worin
R¹, R² gleich oder verschieden sind und H oder C₁-C₆-Alkyl, linear oder verzweigt und/oder Aryl;
R³ C₁-C₁₀-Alkylen, linear oder verzweigt, C₆-C₁₀-Arylen, -Alkylarylen oder -Arylalkylen;
M Mg, Ca, Al, Sb, Sn, Ge, Ti, Fe, Zr, Ce, Bi, Sr, Mn, Li, Na, K und/oder eine protonierte Stickstoffbase;
m 1 bis 4; n 1 bis 4; x 1 bis 4 bedeuten
als Komponente D 5 bis 10 Gew.-% Melaminpolyphosphate, als Komponente E 15 bis 30 Gew.-% Verstärkungsstoffe und als Komponente F 0,1 bis 2 Gew.-% weitere Additive, wobei die Summe der Gewichtskomponenten 100 Gew.-% ergibt.

2. Flammwidrige Polyestercompounds nach Anspruch 1, **dadurch gekennzeichnet, dass** R¹, R² gleich oder verschieden sind und Methyl, Ethyl, n-Propyl, iso-Propyl, n-Butyl, tert.-Butyl, n-Pentyl und/oder Phenyl bedeuten.

3. Flammwidrige Polyestercompounds nach Anspruch 1 oder 2, **dadurch gekennzeichnet, dass** R³ Methylen, Ethylen, n-Propylen, iso-Propylen, n-Butylen, tert.-Butylen, n-Pentylen, n-Octylen oder n-Dodecylen; Phenylen oder Naphthylen; Methyl-phenylen, Ethyl-phenylen, tert.-Butylphenylen, Methyl-naphthylen, Ethylnaphthylen oder tert.-Butylnaphthylen; Phenyl-methylen, Phenyl-ethylen, Phenylpropylen oder Phenyl-butylen bedeutet.

4. Flammwidrige Polyestercompounds nach einem oder mehreren der Ansprüche 1 bis 3, **dadurch gekennzeichnet, dass** es sich bei der Komponente E um mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat und/oder Bariumsulfat handelt.

5. Flammwidrige Polyestercompounds nach einem oder mehreren der Ansprüche 1 bis 4, **dadurch gekennzeichnet, dass** es sich bei der Komponente E um Glasfasern handelt enthalten.

6. Flammwidrige Polyestercompounds nach einem oder mehreren der Ansprüche 1 bis 5, **dadurch gekennzeichnet, dass** sie weiterhin Carbodiimide enthalten.

7. Flammwidrige Polyestercompounds nach einem oder mehreren der Ansprüche 1 bis 6, **dadurch gekennzeichnet, dass** es sich bei der Komponente F um Gleit- und/oder Entformungsmittel handelt und es sich bei den Gleit- und/oder Entformungsmitteln um langkettige Fettsäuren, deren Salze, deren Esterderivate und/oder Amidderivate, Montanwachse und/oder niedermolekulare Polyethylen- und/oder Polypropylenwachse handelt.

8. Verfahren zur Herstellung von flammwidrigen Polyestercompounds, **dadurch gekennzeichnet, dass** man die Komponenten A bis F in den genannten Gewichtsanteilen durch Schmelzextrusion vermischt.

9. Fasern, Folien und Formkörpern aus den flammwidrigen Polyestercompounds nach einem oder mehreren der Ansprüche 1 bis 7.

10. Verwendung der Fasern, Folien und Formkörper gemäß Anspruch 9 im Haushalt, der Industrie, in Medizin, in Kraftfahrzeugen, in Flugzeugen, in Schiffen, in Raumschiffen sowie in anderen Fortbewegungsmitteln, in Büroausstattungen sowie in Gegenständen und Gebäuden die einen erhöhten Brandschutz erfordern.
